# EUROPÄISCHE PATENTSCHRIFT

(11) **EP 3 243 700 B1**
(45) Veröffentlichungstag und Bekanntmachung des Hinweises auf die Patenterteilung: **23.06.2021**
(21) Anmeldenummer: 17000800.7
(22) Anmeldetag: 10.05.2017
(51) Int. Cl.: B60P 7/08, B60P 7/15, B60J 5/06, B60J 7/16

(54) **NUTZFAHRZEUGAUFBAU**
COMMERCIAL VEHICLE STRUCTURE
CARROSSERIE DE VÉHICULE UTILITAIRE

(30) Priorität: 12.05.2016 DE 102016108828
(43) Veröffentlichungstag der Anmeldung: 15.11.2017
(73) Patentinhaber: Fahrzeugwerk Bernard Krone GmbH & Co. KG, 49757 Werlte (DE)
(72) Erfinder: Menke, Ansgar, D - 49757 Werlte (DE)
(74) Vertreter: Pott, Ulrich

(56) Entgegenhaltungen:
- EP-A1- 2 149 490
- DE-A1-102014 104 428
- DE-U1- 29 808 621
- US-A- 4 861 094
- US-A1- 2006 078 398
- US-B1- 7 578 539

## Beschreibung

Die Erfindung bezieht sich auf einen Nutzfahrzeugaufbau mit einem oberhalb eines Laderaumbodens vorgesehenen Laderaum gemäß dem Oberbegriff des Patentanspruchs 1.

Nutzfahrzeugaufbauten der eingangs genannten Art mit Ladungssicherungselementen und Anordnungen sind in vielfältiger Ausgestaltung bekannt. So ist es beispielsweise bekannt, am Fahrzeug z. B. zwischen Fahrzeugrungen Einsteckbretter vorzusehen oder Kombibefestigungsschienen, die jeweils mit Ausschnitten versehen sind, um darin sich quer zum Laderaumboden erstreckende Sperrbalken, Gurte, Wandelemente und dergleichen zu befestigen. Des Weiteren ist bekannt, an seitlichen Befestigungsschienen des Laderaumbodens Sperrbalken festzulegen, an denen sich wiederum parallel zur Fahrtrichtung, aber auch diagonal zur Längsmittelachse eines Nutzfahrzeugaufbaus Spanngurte befestigen lassen. Ebenfalls ist es bekannt, in den Laderaumboden Befestigungslöcher einzulassen, in die aufrecht stehende Stützstangen hineinzustecken sind.

Nachteilig bei all diesen Ladungssicherungsanordnungen und Ladungssicherungssystemen zur Ladungssicherung, insbesondere auch zur rückwärtigen Ladungssicherung, ist, dass diese eine bestimmte Art eines Nutzfahrzeugaufbaus vorsehen, um beispielsweise Einsteckbretter vorsehen zu können. An Nutzfahrzeugaufbauten, die verschiebbare Seitenplanen haben, können solche Einsteckbretter vorgesehen sein, aber aufgrund der aufwendigen Handhabung, des zusätzlichen Gewichts und der zusätzlich notwendigen Vorrichtungen zur Anbringung sind diese Einsteckbretter unerwünscht. Die bekannten Mittelrungen werden nicht für die Ladungssicherung verwendet, weil diese üblicherweise nur an ihrem unteren Ende mit der Befestigungsschiene verbunden sind, insbesondere bei Fahrzeugaufbauten mit beweglichen Dächern, und deshalb in ihrem mittleren oder oberen Abschnitt keine hohen Ladungssicherungskräfte aufzunehmen vermögen. Einer rückwärtigen Ladungssicherung halten die bekannten Mittelrungen nicht ohne Beschädigungen am Außenbaum, der Mittelrunge, der Plane oder dem Aufbau stand.

Sollen vertikal aufragende Stützstangen eingebracht werden, ist der Laderaumboden in baulich aufwendiger Weise mit entsprechenden Befestigungsschienen auszubilden, die mit Abstand zueinander in den Laderaumboden einzulassen sind. Dies ist ebenfalls aufwendig.

Aus der US 4,861,094 A und aus der US 7,578,539 B1 sind Nutzfahrzeugaufbauten der eingangs genannten Art bekannt. Diese haben jeweils ein Ladungssicherungselement, das in oder entgegen der Fahrtrichtung über ein Arretierelement bewegungsgesichert vorzusehen ist. Dies erfordert allerdings ein aufwendiges Lösen des Arretierelementes, um einen Bewegungsvorgang einzuleiten.

Aus der DE 298 08 621 U1 ist ein Nutzfahrzeugaufbau mit einem Hubdach bekannt, das über einen hydraulischen Antrieb und über teleskopartig ausfahrbare Eckrungen anzuheben und abzusenken ist. Dabei sind auch Mittelrungen vorgesehen, die ebenfalls teleskopisch gestaltet sind, so dass diese einer Anhebebewegung und einer Absenkbewegung des Hubdaches folgen können. Diese sind an einer Längsschiene des Hubdaches mittels eines Rollenwagens aufgehängt und können z. B. für einen Be- und Entladevorgang verschoben werden. Soll Ladegut zusätzlich gesichert werden, ist dies jedoch nur mit zusätzlichen Bauteilen zu realisieren.

Es ist Aufgabe der vorliegenden Erfindung, in baulich einfacher Weise eine Ladungssicherung vorzusehen, die in handhabungstechnisch einfacher Weise von einer Bedienperson am Nutzfahrzeugaufbau vorgesehen werden kann.

Zur Lösung dieser Aufgabe zeichnet sich der Nutzfahrzeugaufbau durch die im Patentanspruch 1 angegebenen Merkmale aus.

Als erfindungsgemäßes Ladungssicherungselement kann beispielsweise eine Mittelrunge verwendet werden. Damit ist eine Ladungssicherungsanordnung für einen Nutzfahrzeugaufbau geschaffen, die mit nur wenigen Handgriffen im Bedarfsfall zur Ladungssicherung vorgesehen werden kann. Das Ladungssicherungselement dieser Ladungssicherungsanordnung erstreckt sich in einfacher Weise von der Befestigungsschiene hin bis zum oberen Außenbaum, der nur dahingehend in baulicher Weise erweitert werden muss, dass er seinerseits eine entsprechende Befestigungsaufnahme für dieses Ladungssicherungselement aufweist. Durch die Verriegelung des Ladungssicherungselements auch an seinem dem Außenbaum benachbarten Ende vermag dieses über seine gesamte Höhe hinweg hohe Ladungssicherungskräfte aufzunehmen und in den Nutzfahrzeugaufbau zu übertragen, ohne dass dabei das Ladungssicherungselement beschädigt wird. Durch das Arretierelement, das beispielsweise als ein Verriegelungsbolzen ausgebildet sein kann, können in oder entgegen der Fahrtrichtung des Nutzfahrzeugs wirkende Ladungssicherungskräfte in den Außenbaum und von diesem aus in den übrigen Nutzfahrzeugaufbau übertragen werden. Die nach oben über das Arretierelement und nach unten auf herkömmliche Weise abgestützte Mittelrunge vermag nun hohe Ladungssicherungskräfte aufzunehmen.

Die Verbindung des Ladungssicherungselements mit dem Außenbaum bedeutet, dass diese beiden Bauteile in ihrer Einbaulage zur Ladungssicherung nicht zwangsläufig einen Kontakt miteinander haben müssen, sondern so zueinander verbaut sind, dass sich im Ladungssicherungsfall ausreichend hohe Haltekräfte aufbauen können. Ein direkter Bauteilkontakt ist beispielsweise bei formsteifen Bauteilen nicht zwingend erforderlich. Die Verbindung des Ladungssicherungselements mit dem Außenbaum muss vielmehr nur so ausgeführt sein, dass sich im Sicherungsfall eine kraft- und/oder formschlüssige Verbindung des Ladungssicherungselements mit dem Außenbaum und damit mit dem Nutzfahrzeugaufbau einstellt. Deshalb ist auch eine Montage mit einem gewissen Spiel des Ladungssicherungselements in seiner Einbaulage im Verhältnis zum Arretierelement möglich. Dafür sind dem Fachmann eine Vielzahl möglicher Lösungen aus der Verbindungstechnik bekannt.

Je nachdem, in welche Richtung das Arretierelement eine Verlagerungsbewegung des Ladungssicherungselements sperrt, kann das Ladungssicherungselement auch für eine rückwärtige Ladungssicherung verwendet werden. Das Arretierelement sperrt in seiner Verriegelungsstellung die Bewegung des Ladungssicherungselements in die Richtung, in die sich die Ladung auch bei einem Unfall oder bei einer übermäßigen Beschleunigung bewegen würde, bei der die Ladung ohne eine zusätzliche Sicherung verrutschen würde. Dabei kann die Mittelrunge weiterhin verschieblich bleiben, wenn das Arretierelement zwischen dem Außenbaum und dem Ladungssicherungselement außer Eingriff gebracht werden kann, beispielsweise bei Be- und Entladevorgängen, bei denen eine feststehend montierte Mittelrunge eher hinderlich wäre, oder wenn das Ladungssicherungselement in eine andere Position verbracht werden soll, um dort vorhandene Ladung besser zu schützen. Das Arretierelement kann also in seiner Position beweglich, insbesondere höhenbeweglich, angeordnet sein. Die Möglichkeit, das Ladungssicherungselement wahlweise an verschiedenen Stellen des Außenbaums festlegen zu können, ergibt sich, wenn das Arretierelement an verschiedenen Positionen entlang der Länge des Nutzfahrzeugaufbaus in eine Verriegelungsstellung gebracht werden kann.

Ein Arretierelement kann doppelt wirkend ausgebildet sein, indem er Verschiebebewegungen des Ladungssicherungselements in beide Richtungen blockiert und sperrt, oder er ist nur einfach wirkend, indem er nur eine Verschiebebewegung in eine Richtung blockiert und sperrt und eine Bewegung des Ladungssicherungselements in eine andere Richtung möglich bleibt. Bei der Verwendung von zwei einfach wirkenden Arretierelementen, die jeweils eine Verschiebebewegung des Ladungssicherungselements in eine Richtung blockieren, kann auch eine Blockierung der Verschiebebewegung in zwei Richtungen herbeigeführt werden. Die zu einem Arretierelement zugehörige Verriegelungsvorrichtung kann beispielsweise jeweils als ein zwei- oder mehrteiliges Riegel- oder Rastelement ausgeführt sein, bei dem ein Teil in eine vorgegebene Verriegelung oder Rastung des anderen Teils einrastet. Die Verbindung der beiden Teile der jeweiligen Verriegelungsvorrichtung kann form- und/oder kraftschlüssig durch eine entsprechende Gestaltung, Anordnung, Dimensionierung und Auslegung der beteiligten Bauteile erfolgen. Die Riegelaufnahmen oder die Rastung können sich in Längsrichtung des Außenbaumes über einen kürzeren oder längeren Abschnitt erstrecken, so dass das Ladungssicherungselement in verschiedenen Positionen feststellbar ist und sich eine hohe Variabilität des Systems ergibt.

Nach einer Ausgestaltung der Erfindung weist ein jeweiliger Außenbaum als Befestigungsaufnahme eine sich zumindest bereichsweise entlang des Außenbaumes erstreckende Führungseinrichtung auf, in der das Ladungssicherungselement über einen Laufwagen festlegbar ist, und das Arretierelement ist in einer den Laufwagen in einer Sicherungsstellung des Ladungssicherungselements in die und/oder entgegen die Fahrtrichtung des Nutzfahrzeugaufbaus sperrenden Position am Außenbaum, dem Dach oder der Führungseinrichtung befestigt. Als eine Führungseinrichtung kann beispielsweise eine an oder in einem Profil ausgebildete Laufkammer oder eine Laufschiene dienen, an der entlang der Laufwagen ohne die Verriegelung durch das Arretierelement beweglich ist. Dazu können mehrere Führungseinrichtungen vorgesehen sein, die abschnittweise oder auch durchgehend vorhanden sind. Ein Laufwagen mit z. B. einer oder zwei Laufrollen oder einem rollenlosen Gleitelement, mit dem das Ladungssicherungselement verbunden ist, kann beispielsweise über die gesamte Längserstreckung des Führungseinrichtung entlang bewegt werden, so dass das Ladungssicherungselement an beliebiger Stelle des Führungselements am Außenbaum des Nutzfahrzeugs und damit der Ladefläche des Nutzfahrzeugaufbaus platziert werden kann.

Nach einer Ausgestaltung der Erfindung ist das Arretierelement am Ladungssicherungselement befestigt. Das Arretierelement kann insbesondere am Laufwagen ausgebildet sein, wenn ein solcher am Ladungssicherungselement ausgebildet ist. Im Außenbaum selbst, im Dach oder in am Außenbaum oder am Dach befestigten Konsolen können Aussparungen ausgebildet sein, in die das Arretierelement in der Verriegelungsstellung hineinreicht, so dass dieser zumindest in eine der ihm möglichen Bewegungsrichtungen in seiner Verriegelungsstellung lagefixiert ist. Das Arretierelement kann als ein Teil einer Mittelrunge oder des an der Mittelrunge befestigten Laufwagens oder als diese Bauteile selbst ausgebildet sein, die bis in den Außenbaum, das Dach oder am Außenbaum oder dem Dach befestigte Konsolen hineinragen. Zur Ver- und Entriegelung kann das Arretierelement selbst zwischen einer Ver- und Entriegelungsstellung verstellbar sein, oder der Außenbaum und/oder das Dach sind aus einer Schließstellung in eine Offenstellung so nach oben hin verlagerbar, dass das Arretierelement und somit die Mittelrunge beziehungsweise das Ladungssicherungselement dadurch nicht mehr in seiner Beweglichkeit blockiert wird.

Das ist insbesondere bei Hubdächern eine einfache und vorteilhafte Lösung. Zur Entriegelung genügt es, das Hubdach und/oder den Außenbaum anzuheben, was für Entladevorgänge sowieso häufig gemacht werden muss. Danach kann die Mittelrunge beliebig verschoben werden, da sie zumindest in ihrem oberen Bereich nicht mehr verriegelt ist. Die Verriegelung ist durch einfaches Absenken des Hubdaches möglich, was ebenfalls bei Be- und Entladevorgängen häufig gemacht werden muss. Es entstehen also durch die Ver- und Entriegelung des Ladungssicherungselements mit dem Hubdach im oberen Bereich des Ladungssicherungselements keine zusätzlichen Arbeitsvorgänge, gleichwohl ergibt sich aber eine hochbelastbare zusätzliche Sicherungsmöglichkeit für Ladegut mit geringen Zusatzkosten. Auch eine Kombination der Möglichkeiten zur Anordnung von Arretierelementen ist realisierbar.

Nach einer Ausgestaltung der Erfindung ist zumindest ein Arretierelement am Außenbaum, dem Dach oder der Führungseinrichtung befestigt. Das Arretierelement kann dazu beispielsweise als eine Art Stopper ausgebildet sein, der mit dem Außenbaum, dem Dach oder der Führungseinrichtung verbunden ist und eine Art Anschlag bildet, gegen den das Ladungssicherungselement mit einem Bauteil seines dem Außenbaum benachbarten Endes anschlägt, so dass durch das entsprechende Arretierelement eine weitere Verfahrbewegung des Ladungssicherungselements blockiert ist. Im Sicherungsfall werden die auf das Ladungssicherungselement einwirkenden Kräfte über das Arretierelement auf den Außenbaum, das Dach oder die Führungseinrichtung übertragen. Auch hier ist bei Hubdächern eine einfache Ver- und Entriegelung des Ladungssicherungselements durch ein Anheben und Absenken des Hubdaches möglich.

Der Nutzfahrzeugaufbau weist ein über eine Hubvorrichtung anhebbares Dach und das Arretierelement eine Wirklänge auf, die kürzer ist als der maximal mögliche Hubweg bei der Hubbewegung des Daches. Mit der Wirklänge des Arretierelements ist die Länge gemeint, über die er in seiner Sperrlage das Ladungssicherungselement nach oben hin im Außenbaum oder dem Dach oder daran befestigten Konsolen abstützt. Wenn der maximal mögliche Hubweg bei der Hubbewegung des Daches länger ist als die Wirklänge des Arretierelements, so ist es möglich, mit der Hubbewegung die Verriegelungswirkung des Arretierelements aufzuheben. Das gilt unabhängig davon, ob das Arretierelement mit dem Ladungssicherungselement oder dem Außenbaum oder dem Dach verbunden ist. Die Vorteile, die Verriegelung mit dem Arretierelement über eine Hubbewegung des Daches aufheben zu können, sind bereits vorstehend beschrieben worden.

Nach einer Ausgestaltung der Erfindung überträgt das Ladungssicherungselement über ein zusätzliches Spannelement Ladungssicherungskräfte in und/oder entgegen der Fahrtrichtung in den Nutzfahrzeugaufbau. Das Ladungssicherungselement kann durch ein zweites Spannelement, beispielsweise einen Spanngurt, mit der Befestigungsschiene verspannt werden. Zusätzliche Spannelemente sind insbesondere dann vorteilhaft, wenn das Ladungssicherungselement nicht kraft- und/oder formschlüssig mit dem Außenbaum verbunden ist. Die Spannelemente können dann zusätzlich die Ladungssicherungskräfte in und/oder gegen die Fahrtrichtung aufnehmen.

Nach einer Ausgestaltung der Erfindung ist das Ladungssicherungselement über das Spannelement an einer weiteren Befestigungsaufnahme der Befestigungsschiene, dem Außenbaum, einer arretierbaren Mittelrunge und/oder der Dachkonstruktion festlegbar. Wird dann das Ladungssicherungselement mit der Befestigungsaufnahme der Befestigungsschiene verbunden, kann über das Spannelement das Ladungssicherungselement beispielsweise über den Außenbaum verspannt werden. Dabei erstreckt sich vorzugsweise das Spannelement in diagonaler Ausrichtung zur einer Befestigungsaufnahme der Befestigungsschiene, die einen bestimmten Abstand aufweist zu der Befestigungsaufnahme, in die das Ladungssicherungselement eingehakt ist, dem Außenbaum, einer arretierbaren Mittelrunge und/oder der Dachkonstruktion. Die Mittelrunge kann dabei form- und/oder kraftschlüssig über eine Arretierung mit dem Nutzfahrzeugaufbau verbunden sein. Das Spannelement kann dabei beliebig so ausgestaltet sein, dass es Ladungssicherungskräfte aufzunehmen vermag. Dazu kann es als Spanngurt, Spannseil oder Spannkette ausgebildet sein. Die Ladungssicherungskräfte vermögen aber auch formsteife Raumkörper aufzunehmen, die als ein Spannelement verwendet werden. Wegen ihrer Formsteifigkeit müssen solche Spannelemente nicht zwingend fest verspannt mit dem Nutzfahrzeugaufbau verbunden sein. Ohne eine feste Verspannung kann als ein starrer Raumkörper beispielsweise eine Spannstange als Spannelement verwendet sein. Das spannbare Spannelement kann beispielsweise über eine Spannvorrichtung wie eine Ratsche spielfrei montiert werden. Formsteife Spannelemente können auch über andere Befestigungsmittel mit dem Nutzfahrzeugaufbau verbunden sein.

Bei dem Nutzfahrzeugaufbau weist das Ladungssicherungselement Befestigungselemente zur Anordnung von sich quer oberhalb des Ladebodens erstreckende Ladungsstützelementen auf. Kumulativ oder alternativ dazu hat das Ladungssicherungselement seinerseits Aufnahmen, z. B. Ösen, Schlüssellochausnehmungen und dergleichen Haltevorrichtungen bzw. Befestigungsaufnahmen, um quer zur Längserstreckung des Laderaumbodens weitere Ladungssicherungselemente vorzusehen. Bevorzugt wird, dass ein derartiges quer zur Laderaumfläche erstreckendes zusätzliches Ladungssicherungselement als Stützelement ausgebildet ist. Das kann beispielsweise ein Stützelement sein in Gestalt eines Gitternetzes aus Spanngurten, die in die entsprechenden Halter bzw. Aufnahmen an zwei gegenüberliegend angeordneten Ladungssicherungselementen anzubringen sind. Es können auch metallische Querstangen eingebracht werden.

Es wird ausdrücklich darauf hingewiesen, dass der Gegenstand des Hauptanspruchs jeweils für sich, aber auch in einer beliebigen Kombination mit den Merkmalen der Unteransprüche kombinierbar ist.

Die Erfindung soll nun anhand von Ausführungsbeispielen näher erläutert werden. Dazu wird auf weitere Unteransprüche, die nachfolgende Beschreibung und die Zeichnungen verwiesen. In den Zeichnungen zeigen:
- Fig. 1: ausschnittsweise ein Ausführungsbeispiel eines Nutzfahrzeugaufbaus nach der Erfindung mit Darstellung einer Befestigungsschiene im Laderaumboden, ein mit Abstand dazu angeordneter Außenbaum und eine dazwischen gelegene Ladungssicherungsanordnung;
- Fig. 2: ausschnittsweise ein Ausführungsbeispiel eines Ladungssicherungselementes mit einer ersten Möglichkeit der Anbindung an den Außenbaum;
- Fig. 3: eine zu Fig. 2 analoge Darstellung mit einem Ladungssicherungselement und einer alternativen Anbindungsmöglichkeit an den Außenbaum mit einer Bremsvorrichtung,
- Fig. 4: in einer Seitenansicht den Außenbaum mit einer weiteren alternativen Möglichkeit der Anbindung des Ladungssicherungselementes an den Außenbaum mit einer automatisch arbeitenden Bremsvorrichtung,
- Fig. 5: eine zu Fig. 1 analoge Darstellung mit einem alternativen Ausführungsbeispiel eines Ladungssicherungselementes,
- Fig. 6:: ein weiteres ausschnittsweises Ausführungsbeispiel eines Nutzfahrzeugaufbaus,
- Fig. 7:: eine Teilansicht des Verbindungsbereichs des Ladungssicherungselements mit dem Außenbaum in einer Verriegelungsstellung, und
- Fig. 8:: die in Fig. 7 dargestellte Teilansicht mit einem angehobenen Außenbaum.

In der Zeichnung sind nur die zum unmittelbaren Verständnis der Erfindung notwendigen Teile des Nutzfahrzeugaufbaus gezeigt. Übereinstimmende Teile sind in den einzelnen Figuren mit übereinstimmenden Bezugsziffern versehen.

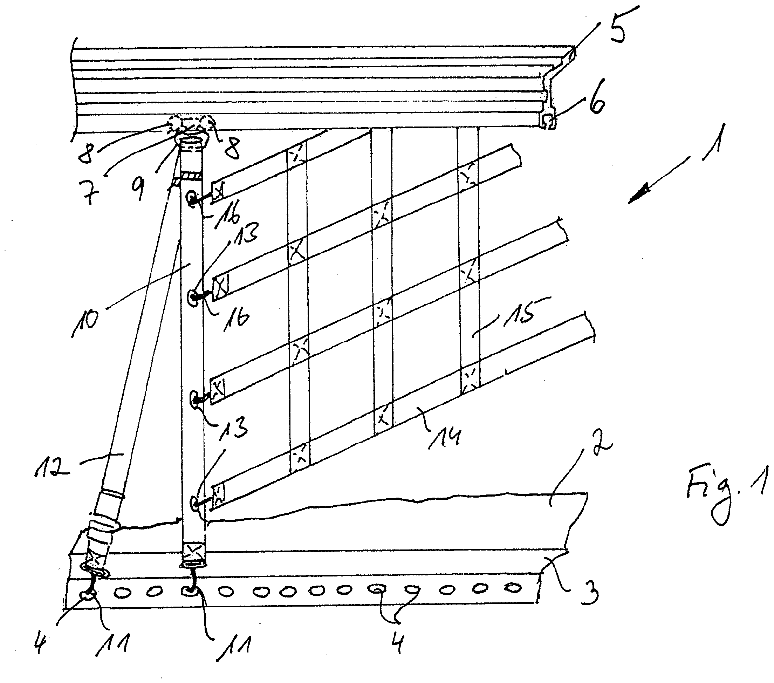

In Figur 1 ist ausschnittsweise ein Nutzfahrzeugaufbau 1 gezeigt, der einen Laderaumboden 2 aufweist, an den sich eine seitliche Befestigungsschiene 3 anschließt, die verschiedene Löcher 4 als Befestigungsaufnahmen aufweist. Der Nutzfahrzeugaufbau 1 hat im oberen seitlichen Eckbereich einen Außenbaum 5. Zwischen dem Laderaumboden 2 und dem Außenbaum 5 können sich Seitenwände erstrecken, aber auch seitliche Schiebeplanen und dergleichen Teile, die einen Laderaum begrenzen. Oberseitig kann sich an den Außenbaum 5 ein Dach anschließen, das beispielsweise auch als aufschiebbares Planendach ausgestaltet sein kann. Der Außenbaum 5 hat seinerseits eine durchgehende Befestigungsaufnahme 6, die in dem gezeigten Ausführungsbeispiel als Laufkammer ausgebildet ist. In dieser Laufkammer 6 kann ein Laufwagen 7 mit zwei Rollen 8 ablaufen und damit verschoben werden. Dieser Laufwagen 7 hat eine Befestigungsöse 9, an der ein Ladungssicherungselement 10 in Gestalt eines Gurtes befestigt ist. Somit ist dieser Gurt als Ladungssicherungselement 10 verschieblich an dem Außenbaum 5 befestigt. In dem dem Laderaumboden 2 zugewandten Ende des Ladungssicherungselementes 10 ist ein Einhängehaken 11 vorgesehen, der in eine Befestigungsaufnahme 4 der Befestigungsschiene 3 eingehakt ist.

Um das Ladungssicherungselement 10 sicher zu verspannen, ist zusätzlich ein Spannelement 12 vorgesehen, das in dem Ausführungsbeispiel ebenfalls als Spanngurt ausgebildet ist und an seinem, der Befestigungsschiene 3 zugewandten Ende ebenfalls einen Befestigungshaken 11 aufweist, dass ebenfalls in eine Befestigungsaufnahme 4 der Befestigungsschiene 3 eingehakt ist. Allerdings mit einem gewissen Abstand zu dem Ladungssicherungselement 10, so dass dieser Spanngurt 12 sich in diagonaler Ausrichtung von dem Außenbaum 5 zur Befestigungsschiene 3 erstreckt. Das Ladungssicherungselement 10 hat seinerseits Ösen 13 als Befestigungselemente für sich quer oberhalb des Ladebodens 2 erstreckende Ladungsstützelemente 14 und 15, die über Haken 16 verbunden sind. Dabei bilden diese Ladungsstützelemente 14 und 15 ein Gitternetz, das sich quer über den Ladeboden 2 erstreckt. Aufgrund der Vielzahl der Befestigungsaufnahmen 4 in der Befestigungsschiene 3 und aufgrund der Ausbildung der Befestigungsaufnahme 6 in Gestalt der Laufkammer am Außenbaum 5 kann das Ladungssicherungselement 10 mit den Ladungsstützelementen 14 und 15 und dem Spannelement 12 an nahezu jeder beliebigen Stelle des Ladebodens vorgesehen sein, um Ladung in Längsrichtung des Nutzfahrzeugaufbaus abzustützen.

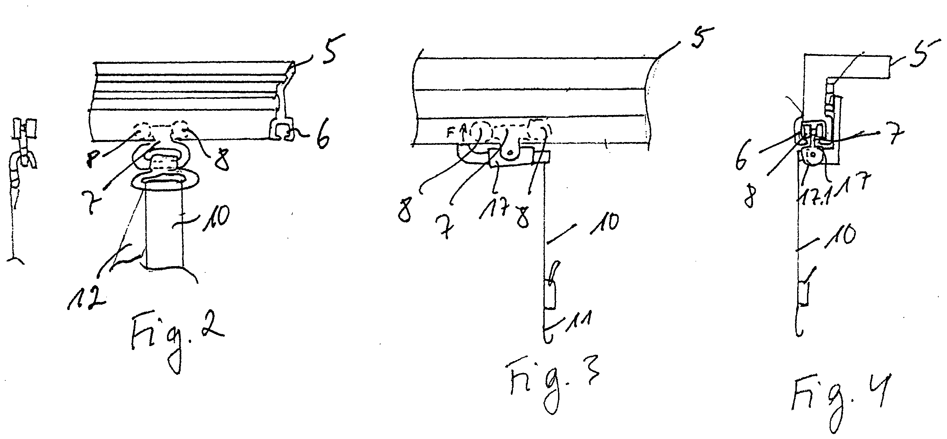

In Fig. 2 ist die Anbindung des Ladungssicherungselementes 10 am Außenbaum 5 mit der Laufkammer 6, dem Laufwagen 7, mit den Rollen 8 noch einmal näher veranschaulicht. Bei ansonsten gleichem Aufbau ist hier noch einmal eine Bremsvorrichtung 17 für den Laufwagen 7 dargestellt. Ähnlich ist auch das Ausführungsbeispiel nach Fig. 4. Hier ist die Bremsvorrichtung 17 dergestalt ausgebildet, dass bei einer Verspannung des Ladungssicherungselementes 10 ein Kopf 17.1 in einer Ausnehmung hineingedrückt wird, so dass dadurch der Laufwagen 7 gegen eine Bewegung gesichert ist.

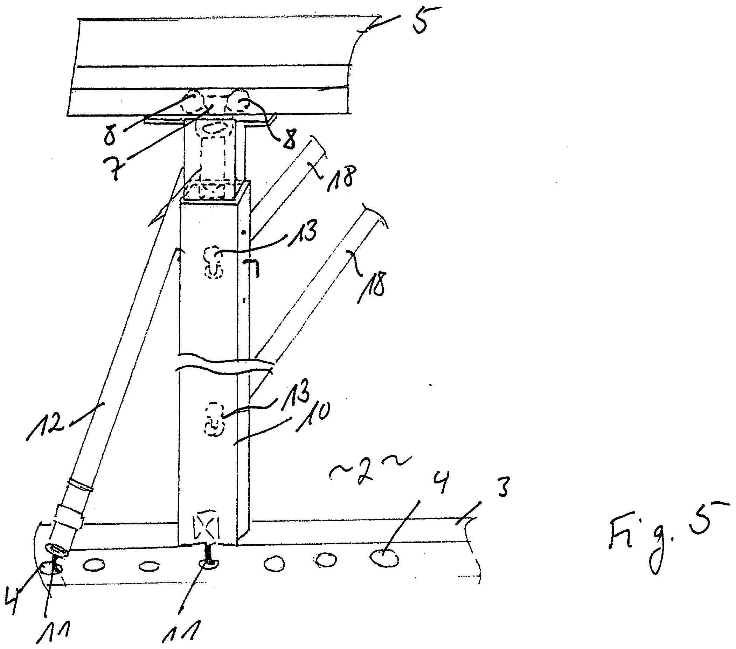

Bei ansonsten gleichem Aufbau wie das Ausführungsbeispiel nach Fig. 1 ist das Ladungssicherungselement 10 in dem Ausführungsbeispiel nach Fig. 5 als metallisches Rechteckprofil ausgebildet. Dieses metallische Rechteckprofil weist als Befestigungsaufnahmen 13 Schlüssellochlöcher auf, in die in diesem Falle metallische Querstreben 18 als Stützelemente eingebracht sind, die sich quer über den Ladeboden 2 erstrecken.

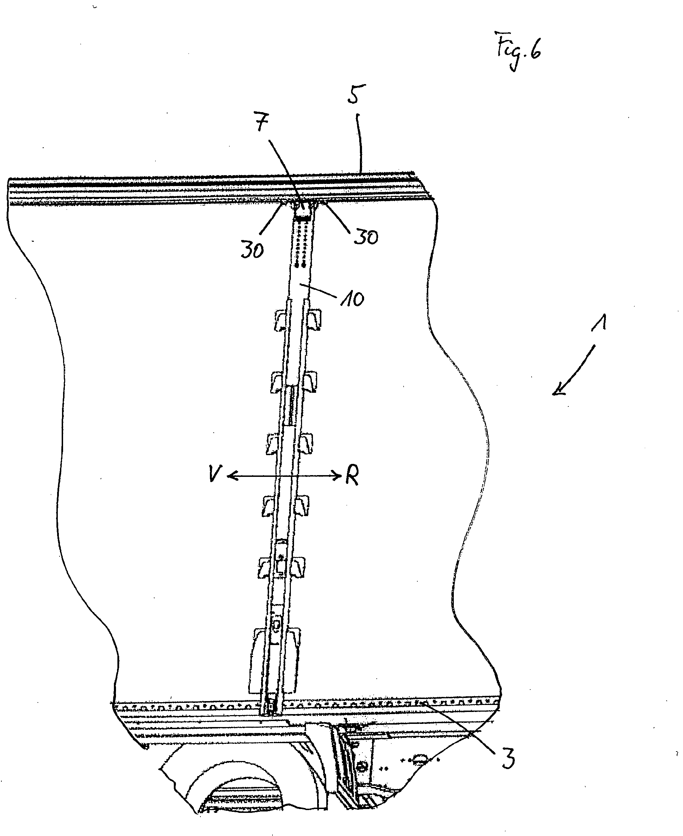

In Fig. 6 ist der Nutzfahrzeugaufbau 1 nur ausschnittweise dargestellt. Zwischen der Befestigungsschiene 3 und dem Außenbaum 5 ist ein an seinen gegenüberliegenden Enden mit diesen Bauteilen verbundenes Ladungssicherungselement 10 gezeigt, das im Ausführungsbeispiel als Mittelrunge ausgestaltet ist. Das Ladungssicherungselement 10 ist an seinem dem Außenbaum 5 benachbarten Ende über zwei eine Verlagerungsbewegung des Ladungssicherungselements 10 in die und entgegen die Fahrtrichtung des Nutzfahrzeugaufbaus 1 sperrende Arretierelemente 30 mit dem Außenbaum 5 verbunden. Die beiden Arretierelemente 30 blockieren jeweils eine Verschiebebewegung des Ladungssicherungselements 10 in eine Richtung. Indem die beiden Arretierelemente 30 an entgegensetzten Enden des Laufwagens 7 angeordnet sind, ist der Laufwagen 7 und damit auch das Ladungssicherungselement 10 nicht mehr in die in und entgegen der Fahrtrichtung des Nutzfahrzeugaufbaus weisenden Richtungen V und R beweglich.

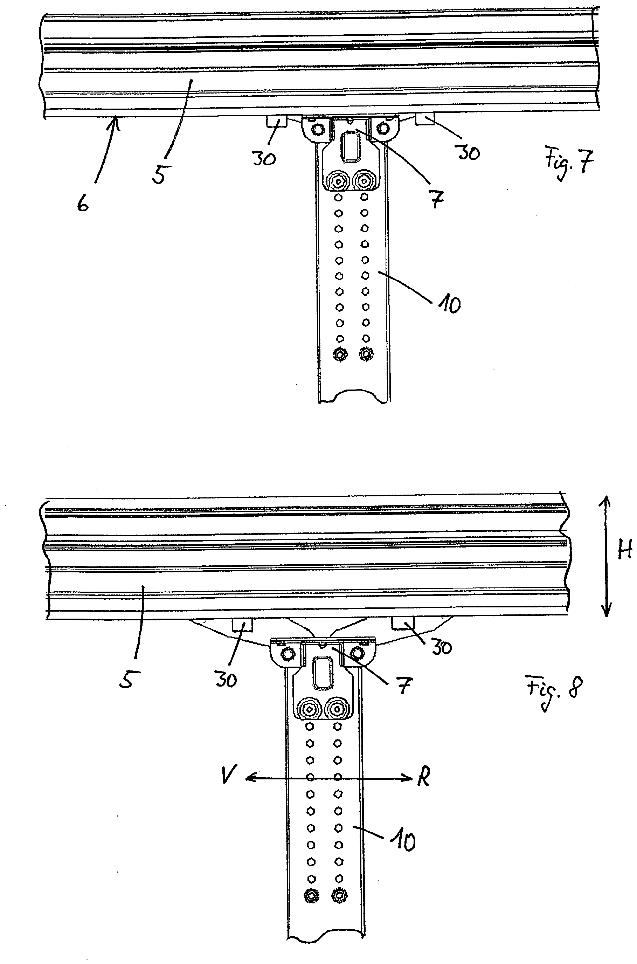

Der Verbindungsbereich des Ladungssicherungselements 10 mit dem Außenbaum 5 ist in Fig. 7 in einer vergrößerten Ansicht dargestellt, wobei in Fig. 7 wieder die verriegelte Stellung des Ladungssicherungselements 10 gezeigt ist. In Fig. 8 ist der in Richtung H zusammen mit dem Dach bewegliche Außenbaum 5 in einer zur Darstellung in Fig. 7 angehobenen Position gezeigt. Da die beiden Arretierelemente 30 am Außenbaum 5 befestigt sind, befinden auch diese sich in einer angehobenen Position. In dieser angehobenen Stellung blockieren die Arretierelemente 30 nicht mehr den Laufwagen 7, der nun in die Richtungen V oder R bewegt werden kann.

Wenn am Außenbaum 5 entlang seiner Baulänge mehr als die beiden gezeigten Arretierelemente 30 angeordnet sind, kann das Ladungssicherungselement 10 wahlweise auch an diesen weiteren Positionen der Arretierelemente 30 festgelegt werden. Wenn auf das Ladungssicherungselement 10 Ladungssicherungskräfte einwirken, können diese über die Arretierelemente 30 in den Außenbaum 5 übertragen werden. Dadurch ist das Ladungssicherungselement 10 nicht mehr nur nach unten zur Befestigungsschiene 3 hin abgestützt, sondern auch nach oben zum Außenbaum 5 hin. Es kann dadurch erheblich größere Haltekräfte erzeugen und die dadurch gesicherte Ladung mit allenfalls geringen Verschiebungen in der Transportposition auf dem Nutzfahrzeugaufbau halten.

Abweichend von dem in den Fig. 6 - 8 gezeigten Ausführungsbeispiel können Verrieglungsbolzen 30 alternativ oder ergänzend natürlich auch an dem Ladungssicherungselement 10 ausgebildet sein.

Die Erfindung ist nicht auf die vorstehend beschriebenen Ausführungsbeispiele beschränkt. Einem Fachmann bereitet es keine Schwierigkeiten, die Ausführungsbeispiele auf eine ihm als geeignet erscheinende Weise abzuwandeln, um sie dadurch an einen konkreten Anwendungsfall anzupassen.

## Patentansprüche

1. Nutzfahrzeugaufbau (1) mit einem oberhalb eines Laderaumbodens (2) vorgesehenen Laderaum, wobei mit Höhenabstand zu dem Laderaumboden (2) sich in Längsrichtung des Nutzfahrzeugaufbaus (1) zu beiden Seiten des Laderaumbodens (2) erstreckend jeweils ein Außenbaum (5) vorgesehen ist und der Laderaumboden (2) jeweils mit Befestigungsaufnahmen (4) versehene Befestigungsschienen (3) aufweist, die den Laderaumboden (2) seitlich begrenzen oder in diesen eingelassen sind und mit einer Ladungssicherungsanordnung, die zumindest ein Ladungssicherungselement (10) aufweist, das an zumindest einer der Befestigungsaufnahmen (4) einer Befestigungsschiene (3) festlegbar ist, wobei ein jeweiliger Außenbaum (5) seinerseits eine Befestigungsaufnahme (6) zur Festlegung eines sich von der Befestigungsschiene (3) zu dem Außenbaum (5) erstreckenden Ladungssicherungselementes (10) aufweist, so dass sich dieses Ladungssicherungselement (10) von der Befestigungsschiene (3) zu dem mit Abstand zu dem Laderaumboden (2) vorgesehenen Außenbaum (5) erstreckt, und das Ladungssicherungselement (10) an seinem dem Außenbaum (5) benachbarten Ende über ein eine Verlagerungsbewegung des Ladungssicherungselements (10) in die und/oder entgegen die Fahrtrichtung des Nutzfahrzeugaufbaus (1) sperrendes Arretierelement (30) mit dem Außenbaum (5) verbunden ist, **dadurch gekennzeichnet, dass** der Nutzfahrzeugaufbau (1) ein über eine Hubvorrichtung anhebbares Dach aufweist und dass das Arretierelement (30) eine Wirklänge aufweist, die kürzer ist als der maximal mögliche Hubweg bei der Hubbewegung des Daches, dass das Ladungssicherungselement (10) Befestigungselemente (13) zur Anordnung von sich quer oberhalb des Ladebodens erstreckende Ladungsstützelementen (14, 15) aufweist und/oder dass das Ladungssicherungselement (10) Aufnahmen zur Anordnung von weiteren Ladungsstützselementen (14, 15) aufweist.

2. Nutzfahrzeugaufbau (1) nach Anspruch 1, **dadurch gekennzeichnet, dass** ein jeweiliger Außenbaum (5) als Befestigungsaufnahme (6) eine sich zumindest bereichsweise entlang des Außenbaumes (5) erstreckende Führungseinrichtung aufweist, in der das Ladungssicherungselement (10) über einen Laufwagen (7) festlegbar ist, und das Arretierelement (30) in einer den Laufwagen (7) in einer Sicherungsstellung des Ladungssicherungselements (10) in die und/oder entgegen die Fahrtrichtung des Nutzfahrzeugaufbaus (1) sperrenden Position am Außenbaum (5), dem Dach oder der Führungseinrichtung befestigt ist.

3. Nutzfahrzeugaufbau (1) nach Anspruch 1 oder 2, **dadurch gekennzeichnet, dass** zumindest ein Arretierelement (30) am Ladungssicherungselement (10) befestigt ist.

4. Nutzfahrzeugaufbau (1) nach einem der vorhergehenden Ansprüche, **dadurch gekennzeichnet, dass** zumindest ein Arretierelement (30) am Außenbaum (5), dem Dach oder der Führungseinrichtung befestigt ist.

5. Nutzfahrzeugaufbau nach einem der Ansprüche 1 bis 4, **dadurch gekennzeichnet, dass** das Ladungssicherungselement (10) über ein zusätzliches Spannelement (12) Ladungssicherungskräfte in und/oder entgegen der Fahrtrichtung in den Nutzfahrzeugaufbau (1) überträgt.

6. Nutzfahrzeugaufbau nach Anspruch 5, **dadurch gekennzeichnet, dass** das Ladungssicherungselement (10) über das Spannelement (12) an einer weiteren Befestigungsaufnahme (4) der Befestigungsschiene (3), dem Außenbaum (5), einer arretierbaren Mittelrunge und/oder der Dachkonstruktion festlegbar ist.

## Claims

1. Commercial vehicle structure (1) comprising a loading space provided above a loading space floor (2), wherein one outer beam (5) is in each case provided extending in the longitudinal direction of the commercial vehicle structure (1) to both sides of the loading space floor (2) at a height distance from the loading space floor (2) and the loading space floor (2) has fastening rails (3) provided with fastening receptacles (4) in each case, which laterally delimit the loading space floor (2) or are incorporated into the loading space floor (2) and comprising a load securing arrangement, which has at least one load securing element (10), which can be fixed on at least one of the fastening receptacles (4) of a fastening rail (3), wherein a respective outer beam (5) has, for its part, a fastening receptacle (6) for fixing a load securing element (10) extending from the fastening rail (3) to the outer beam (5) such that this load securing element (10) extends from the fastening rail (3) to the outer beam (5) provided at a distance from the loading space floor (2) and the load securing element (10) is connected to the outer beam (5) at its end adjacent to the outer beam (5) via a locking element (30) blocking a displacement movement of the load securing element (10) into and/or against the direction of travel of the commercial vehicle structure (1), **characterised in that** the commercial vehicle structure (1) has a roof which can be raised via a lifting device and **in that** the locking element (30) has a pitch length which is shorter than the maximum possible lifting path during the lifting movement of the roof, **in that** the load securing element (10) has fastening elements (13) for arrangement of load support elements (14, 15) extending transversely above the loading floor and/or **in that** the load securing element (10) has receptacles for arrangement of further load support elements (14, 15).

2. Commercial vehicle structure (1) according to claim 1, **characterised in that** a respective outer beam (5) as a fastening receptacle (6) has a guide apparatus extending at least in sections along the outer beam (5), in which the load securing element (10) can be fixed via a carriage (7) and the locking element (30) is fastened on the outer beam (5), the roof or the guide apparatus in a position blocking the carriage (7) in a secured position of the load securing element (10) into the and/or against the direction of travel of the commercial vehicle structure (1).

3. Commercial vehicle structure (1) according to claim 1 or 2, **characterised in that** at least one locking element (30) is fastened on the load securing element (10).

4. Commercial vehicle structure (1) according to any one of the preceding claims, **characterised in that** at least one locking element (30) is fastened on the outer beam (5), the roof or the guide apparatus.

5. Commercial vehicle structure according to any one of claims 1 to 4, **characterised in that** the load securing element (10) transmits via an additional tension element (12) load securing forces in the commercial vehicle structure (1) into and/or against the direction of travel.

6. Commercial vehicle structure according to claim 5, **characterised in that** the load securing element (10) can be fixed via the tension element (12) on a further fastening receptacle (4) of the fastening rail (3), on the outer beam (5), on a lockable middle stanchion and/or on the roof construction.

## Revendications

1. Carrosserie de véhicule utilitaire (1) comprenant un espace de chargement prévu au-dessus d'un fond d'espace de chargement (2), dans lequel un arbre extérieur (5) est prévu s'étendant respectivement dans la direction longitudinale de la carrosserie de véhicule utilitaire (1) des deux côtés du fond d'espace de chargement (2) à une distance en hauteur du fond d'espace de chargement (2) et le fond d'espace de chargement (2) présente des rails de fixation (3) respectivement munis de logements de fixation (4) et qui délimitent latéralement le fond d'espace de chargement (2) ou sont intégrés dans celui-ci et comprenant un agencement de sécurisation de chargement qui présente au moins un élément de sécurisation de chargement (10) qui peut être fixé à au moins un des logements de fixation (4) d'un rail de fixation (3), dans lequel un arbre extérieur respectif (5) présente à son tour un logement de fixation (6) pour fixer un élément de sécurisation de chargement (10) s'étendant depuis le rail de fixation (3) vers l'arbre extérieur (5) de sorte que cet élément de sécurisation de chargement (10) s'étende depuis le rail de fixation (3) vers l'arbre extérieur (5) qui est prévu à distance du fond d'espace de chargement (2), et l'élément de sécurisation de chargement (10) est, au niveau de son extrémité adjacente à l'arbre extérieur (5), relié à l'arbre extérieur (5) par le biais d'un élément d'arrêt (30) bloquant tout mouvement de déplacement de l'élément de sécurisation de chargement (10) dans le sens et/ou le contresens de la marche de la carrosserie de véhicule utilitaires (1), **caractérisée en ce que** la carrosserie de véhicule utilitaire (1) présente un toit qui peut être soulevé par le biais d'un moyen de levage et l'élément d'arrêt (30) présente une longueur utile qui est plus courte que la course de levage maximale possible lors du mouvement de levage du toit, **en ce que** l'élément de sécurisation de chargement (10) présente des éléments de fixation (13) pour agencer des éléments de soutien de de chargement (14, 15) s'étendant transversalement au-dessus du fond de chargement et/ou l'élément de sécurisation de chargement (10) présente des logements pour agencer d'autres éléments de soutien de chargement (14, 15).

2. Carrosserie de véhicule utilitaire (1) selon la revendication 1, **caractérisée en ce qu'**un arbre extérieur respectif (5) présente comme logement de fixation (6) un dispositif de guidage qui s'étend au moins par endroits le long de l'arbre extérieur (5) et dans lequel l'élément de sécurisation de chargement (10) peut être fixé par le biais d'un chariot (7), et l'élément d'arrêt (30) est fixé dans une position bloquant le chariot (7) dans une position de sécurisation de l'élément de sécurisation de chargement (10) dans le sens et/ou le contresens de la marche de la carrosserie de véhicule utilitaire (1) sur l'arbre extérieur (5), le toit ou le dispositif de guidage,.

3. Carrosserie de véhicule utilitaire (1) selon la revendication 1 ou 2, **caractérisée en ce qu'**au moins un élément d'arrêt (30) est fixé sur l'élément de sécurisation de chargement (10) .

4. Carrosserie de véhicule utilitaire (1) selon une des revendications précédentes, **caractérisée en ce qu'**au moins un élément d'arrêt (30) est fixé sur l'arbre extérieur (5), le toit ou le dispositif de guidage.

5. Carrosserie de véhicule utilitaire (1) selon une des revendications 1 à 4, **caractérisée en ce que** l'élément de sécurisation de chargement (10) transmet dans la carrosserie de véhicule utilitaire (1), par le bais d'un élément de tension supplémentaire (12), des forces de sécurisation de chargement dans le sens et/ou le contresens de la marche.

6. Carrosserie de véhicule utilitaire selon la revendication 5, **caractérisée en ce que** l'élément de sécurisation de chargement (10) peut, par le bais de l'élément de tension (12), être fixé sur un autre logement de fixation (4) du rail de fixation (3), l'arbre extérieur (5), un montant central qui peut être bloqué et/ou la construction de toit.
